(19) Europäisches Patentamt / European Patent Office / Office européen des brevets

(11) **EP 3 037 393 A1**

(12) **EUROPEAN PATENT APPLICATION**

(43) Date of publication:
**29.06.2016 Bulletin 2016/26**

(21) Application number: **14200253.4**

(22) Date of filing: **23.12.2014**

(51) Int Cl.:
*C03C 25/24* (2006.01) *C03C 25/26* (2006.01)
*C03C 25/32* (2006.01) *C08J 5/24* (2006.01)
*C09J 103/02* (2006.01) *D04H 1/587* (2012.01)
*D04H 1/64* (2012.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Rockwool International A/S**
**2640 Hedehusene (DK)**

(72) Inventors:
- **Hjelmgaard, Thomas**
  **3480 Fredensborg (DK)**
- **Nissen, Povl**
  **3650 Oelstykke (DK)**
- **Naerum, Lars**
  **2900 Hellerup (DK)**
- **Hansen, Erling Lennart**
  **2830 Virum (DK)**

(74) Representative: **Letzelter, Felix Phillip**
**Meissner, Bolte & Partner GbR**
**Postfach 86 06 24**
**81633 München (DE)**

(54) **Improved Biobinder**

(57) Described is an aqueous binder composition for mineral fibres comprising
a component (i) in the form of one or more compounds selected from
- compounds of the formula, and any salts thereof:

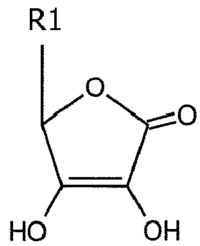

in which R1 corresponds to H, alkyl, monohydroxyalkyl, dihydroxyalkyl, polyhydroxyalkyl, alkylene, alkoxy, amine;
- compounds of the formula, and any salts thereof:

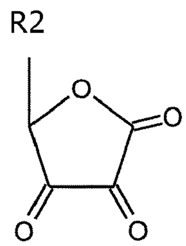

in which R2 corresponds to H, alkyl, monohydroxyalkyl, dihydroxyalkyl, polyhydroxyalkyl, alkylene, alkoxy, amine;

a component (ii) in the form of one or more compounds selected from the group of ammonia, amines or any salts thereof;
a component (iii) in the form of one or more carbohydrates;

a component (iv) in the form of one or more compounds selected from sulfamic acid, derivatives of sulfamic acid or any salt thereof.

## Description

### Field of the Invention

The present invention relates to an aqueous binder for mineral fibre products, a method of producing a bonded mineral fibre product using said binder, and a mineral fibre product comprising mineral fibres in contact with the cured binder.

### Background of the Invention

Mineral fibre products generally comprise man-made vitreous fibres (MMVF) such as, e.g., glass fibres, ceramic fibres, basalt fibres, slag wool, mineral wool and stone wool (rock wool), which are bonded together by a cured thermoset polymeric binder material. For use as thermal or acoustical insulation products, bonded mineral fibre mats are generally produced by converting a melt made of suitable raw materials to fibres in conventional manner, for instance by a spinning cup process or by a cascade rotor process. The fibres are blown into a forming chamber and, while airborne and while still hot, are sprayed with a binder solution and randomly deposited as a mat or web onto a travelling conveyor. The fibre mat is then transferred to a curing oven where heated air is blown through the mat to cure the binder and rigidly bond the mineral fibres together.

In the past, the binder resins of choice have been phenol-formaldehyde resins which can be economically produced and can be extended with urea prior to use as a binder. However, the existing and proposed legislation directed to the lowering or elimination of formaldehyde emissions have led to the development of formaldehyde-free binders such as, for instance, the binder compositions based on polycarboxy polymers and polyols or polyamines, such as disclosed in EP-A-583086, EP-A-990727, EP-A-1741726, US-A-5,318,990 and US-A-2007/0173588.

Another group of non-phenol-formaldehyde binders are reaction products of aliphatic and/or aromatic anhydrides with alkanolamines, e.g., as disclosed in WO 99/36368, WO 01/05725, WO 01/96460, WO 02/06178, WO 2004/007615 and WO 2006/061249. These binder compositions are water soluble and exhibit excellent binding properties. WO 2008/023032 discloses urea-modified binders.

Since some of the starting materials used in the production of these binders are rather expensive chemicals, there is an ongoing need to provide formaldehyde-free binders which are economically produced.

A further effect in connection with previously known aqueous binder compositions from mineral fibres is that at least the majority of the starting materials used for the productions of these binders stem from fossil fuels. There is an ongoing trend of consumers to prefer products that are fully or at least partly produced from renewable materials and there is therefore a need to provide binders for mineral wool which are at least partly produced from renewable materials.

Further, there is an ongoing need to provide binders for mineral wool which enable the production of mineral wool products having good long term mechanical properties.

### Summary of the Invention

Accordingly, it was an object of the present invention to provide an aqueous binder composition which is particularly suitable for bonding mineral fibres, is economically produced and is using renewable materials as starting products for the preparation of the aqueous binder composition.

A further object of the present invention was to provide a mineral fibre product bonded with such a binder composition.

In accordance with a first aspect of the present invention, there is provided an aqueous binder composition for mineral fibres comprising:

a component (i) in the form of one or more compounds selected from

- compounds of the formula, and any salts thereof:

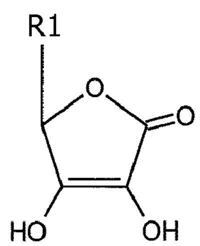

in which R1 corresponds to H, alkyl, monohydroxyalkyl, dihydroxyalkyl, polyhydroxyalkyl, alkylene, alkoxy, amine;

- compounds of the formula, and any salts thereof:

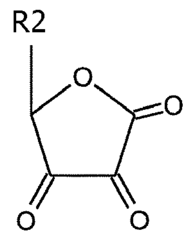

in which R2 corresponds to H, alkyl, monohydroxyalkyl, dihydroxyalkyl, polyhydroxyalkyl, alkylene, alkoxy, amine;

a component (ii) in the form of one or more compounds selected from the group of ammonia, amines or any salts thereof;

a component (iii) in the form of one or more carbohydrates;

a component (iv) in the form of one or more compounds selected from sulfamic acid, derivatives of sulfamic acid or any salt thereof.

In accordance with a second aspect of the present invention, there is provided a method of producing a bonded mineral fibre product which comprises the steps of contacting the mineral fibres with the aqueous binder composition and curing the binder composition.

In accordance with a third aspect of the present invention, there is provided a mineral fibre product comprising mineral fibres in contact with the cured binder composition defined above.

The present inventors have surprisingly found that it is possible to prepare a binder composition for mineral fibres that uses to a large extent starting materials which are renewable and at the same time allow the economical production of the binder. Since a significant part of the starting materials used for the binder according to the present invention stems from biomass and at the same time the materials used are comparatively low in price, the binder according to the present invention is both economically and ecologically advantageous. The combination of these two aspects is particularly remarkable, since "biomaterials" are often more expensive than conventional materials.

At the same time, the binders according to the present invention show excellent properties when used for binding mineral fibres. The mechanical strength is improved and has also an unexpected high level when subjected to ageing conditions.

An additional advantage of the binders according to the present invention is that they have a comparatively high curing speed at a low curing temperature.

Further, the binders according to one embodiment of the present invention are not strongly acidic and therefore overcome corrosion problems associated with strongly acidic binders known from the prior art.

As can be seen from the experimental results documented in the examples below, the aqueous binder compositions according to the present invention show excellent properties when used as a binder for mineral wool. As can further be seen in the experimental results documented in the examples below, the properties of the binders according to the present invention can be further improved by adding additional components.

**Description of the Preferred Embodiments**

The aqueous binder composition according to the present invention comprises:

a component (i) in the form of one or more compounds selected from

- compounds of the formula, and any salts thereof:

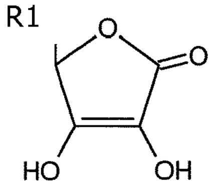

in which R1 corresponds to H, alkyl, monohydroxyalkyl, dihydroxyalkyl, polyhydroxyalkyl, alkylene, alkoxy, amine;

- compounds of the formula, and any salts thereof:

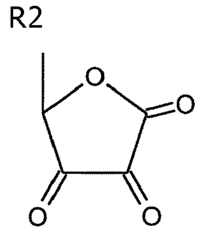

in which R2 corresponds to H, alkyl, monohydroxyalkyl, dihydroxyalkyl, polyhydroxyalkyl, alkylene, alkoxy, amine;

a component (ii) in the form of one or more compounds selected from ammonia, amines or any salts thereof;

a component (iii) in the form of one or more carbohydrates;

a component (iv) in the form of one or more compounds selected from sulfamic acid, derivatives of sulfamic acid or any salt thereof.

Preferably, the binders according to the present invention have a pH of 5.1-10, preferably pH of 6-9.
Preferably, alkyl is $C_1$-$C_{10}$ alkyl.
Preferably, monohydroxyalkyl is monohydroxy $C_1$-$C_{10}$ alkyl.
Preferably, dihydroxyalkyl is dihydroxy $C_1$-$C_{10}$ alkyl.
Preferably, polyhydroxyalkyl is polyhydroxy $C_1$-$C_{10}$ alkyl.
Preferably, alkylene is alkylene $C_1$-$C_{10}$ alkyl.
Preferably, alkoxy is alkoxy $C_1$-$C_{10}$ alkyl.
Preferably, the binders according to the present invention are formaldehyde free.
For the purpose of the present application, the term "formaldehyde free" is defined to characterise a mineral wool product where the emission is below 5 $\mu g/m^2/h$ of formaldehyde from the mineral wool product, preferably below 3 $\mu g/m^2/h$. Preferably, the test is carried out in accordance with ISO 16000 for testing aldehyde emissions.

<u>Component (i) of the Binder</u>

Preferably, component (i) is in the form of one or more components selected from ascorbic acid or isomers or salts or derivatives, preferably oxidized derivatives, thereof.
The present inventors have surprisingly found, that ascorbic acid, which is a comparatively low-price material and can be produced from biomass, or its derivatives, can be used as a basis for a binder composition for mineral fibres.
Ascorbic acid, or vitamin C, is a non-toxic, naturally occurring organic compound with antioxidant properties. Industrially, ascorbic acid can for example be obtained by fermentation of glucose. The core structure of ascorbic acid contains a unique five-membered ring, a γ-lactone, containing an enediol. Ascorbic acid can thus be classified as a 3,4-dihydroxy-furan-2-one.
Even though ascorbic acid does not contain a carboxylic acid functionality, the 3-hydroxy group is reasonably acidic (pKa = 4.04) since the resulting ascorbate anion is stabilized by charge delocalization.

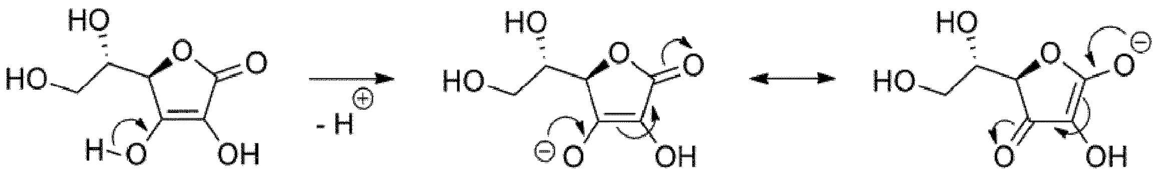

In a preferred embodiment, component (i) is selected from L-ascorbic acid, D-isoascorbic acid, 5,6-isopropylidene ascorbic acid, dehydroascorbic acid and/or any salt of the compounds, preferably calcium, sodium, potassium, magnesium or iron salts.
In a further preferred embodiment, component (i) is selected from L-ascorbic acid, D-isoascorbic acid, 5,6-isopropylidene ascorbic acid and dehydroascorbic acid.

Component (ii) of the Binder

Component (ii) is selected from ammonia, amines or any salts thereof. In a preferred embodiment, component (ii) is selected from ammonia, and/or amines such as piperazine, hexamethylenediamine, m-xylylenediamine, diethylenetriamine, triethylenetetramine, tetraethylenepentamine, monoethanolamine, diethanolamine and/or triethanolamine.
In a particularly preferred embodiment, component (ii) is ammonia.
The ammonia may be added as an ammonium salt and/or as ammonia.
The inclusion of component (ii) allows the further improvement of the binders according to the present invention when used as a binder for mineral wool products.

Component (iii) of the Binder

Component (iii) is in form of one or more carbohydrates.
Starch may be used as a raw material for various carbohydrates such as glucose syrups and dextrose. Depending on the reaction conditions employed in the hydrolysis of starch, a variety of mixtures of dextrose and intermediates is obtained which may be characterized by their DE number, DE is an abbreviation for Dextrose Equivalent and is defined as the content of reducing sugars, determined by the method specified in International Standard ISO 5377-1981 (E). This method measures reducing end groups and attaches a DE of 100 to pure dextrose and a DE of 0 to pure starch.
In a preferred embodiment, the carbohydrate is selected from sucrose, reducing sugars, in particular dextrose, polycarbohydrates, and mixtures thereof, preferably dextrins and maltodextrins, more preferably glucose syrups, and more preferably glucose syrups with a dextrose equivalent value of DE = 20-99, such as DE = 50-85, such as DE = 60-99. The term "dextrose" as used in this application is defined to encompass glucose and the hydrates thereof.
In a further preferred embodiment, the carbohydrate is selected from hexoses, in particular allose, altrose, glucose, mannose, gulose, idose, galactose, talose, psicose, fructose, sorbose and/or tagatose; and/or pentoses, in particular arabinose, lyxose, ribose, xylose, ribulose and/or xylulose; and/or tetroses, in particular erythrose, threose, and/or erythrulose.
In a further preferred embodiment, the carbohydrate is selected from a hexose such as fructose, and/or a pentose such as xylose.
In a particularly preferred embodiment, component (iii) is selected from dextrose, glucose syrup, xylose, fructose or sucrose.
Since the carbohydrates of component (iii) are comparatively inexpensive compounds and are produced from renewable resources, the inclusion of high amounts of component (iii) in the binder according to the present invention allows the production of a binder for mineral wool which is advantageous under economic aspects and at the same time allows the production of an ecological non-toxic binder.

Component (iv) of the Binder

Component (iv) is in form of one or more compounds selected from sulfamic acid, derivatives of sulfamic acid or any salt thereof.
Preferably, component (iv) is selected from the group consisting of sulfamic acid and any salt thereof, such as ammonium sulfamate, calcium sulfamate, sodium sulfamate, potassium sulfamate, magnesium sulfamate, cobalt sulfamate, nickel sulfamate, N-cyclohexyl sulfamic acid and any salt thereof, such as sodium N-cyclohexyl sulfamate.
Sulfamic acid is a, non-toxic compound having the formula

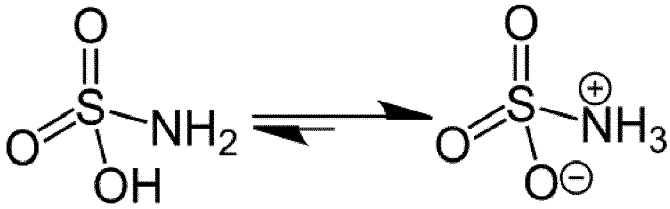

Sulfamic acid and many of its salts are storage stable non-volatile compounds and are available at a comparatively low price. In a preferred embodiment, component (iv) is selected from the group consisting of ammonium sulfamate, sulfamic acid, calcium sulfamate, sodium sulfamate, potassium sulfamate, magnesium sulfamate, cobalt sulfamate, nickel sulfamate, sodium cyclamate, N-cyclohexyl sulfamic acid.

In a preferred embodiment, the proportion of component (iii) and component (iv) is within the range of 0.5-15 wt.-%, in particular 1-12 wt.-%, more particular 2-10 wt.-% component (iv), based on the mass of component (iii).

In a particularly preferred embodiment, the component (iv) is in form of N-cyclohexyl sulfamic acid and/or its salts, preferably ammonium sulfamate and the proportion of component (iii) and component (iv) in form of N-cyclohexyl sulfamic acid and/or its salts, preferably ammonium sulfamate is within the range of 0.5-20 wt.-%, in particular 1-15 wt.-%, more particular 2-10 wt.-% component (iv), based on the mass of component (iii).

In a particularly preferred embodiment, component (iv) is ammonium sulfamate.

Besides providing binders which allow the production of mineral wool products having excellent mechanical properties, the inclusion of component (iv) also in general imparts improved fire resistance and anti-punking properties for aspects according to the invention.

Preferred combinations of components (i), (ii), (iii) and (iv) of the binder

In a preferred embodiment, the aqueous binder composition according to the present invention comprises

- component (i) in the form of ascorbic acid;
- component (ii) in the form of ammonia and/or diethanolamine and/or triethanolamine;
- component (iii) in the form of dextrose and/or a glucose syrup with a DE of 60-99;
- component (iv) in the form of sulfamic acid and/or its salts, preferably ammonium sulfamate and/or N-cyclohexyl sulfamic acid and/or its salts.

Preferred weight ratios of the components (i), (ii), (iii) and (iv)

In a preferred embodiment, the proportion of components (i), (ii), (iii), and (iv) is within the range of 1 to 50 weight-%, such as 1-30 weight-%, such as 1-20 weight-% component (i) based on the mass of components (i) and (iii), 50 to 99 weight-% component (iii) based on the mass of components (i) and (iii), 0.05 to 15 weight-%, such as 1 to 12 weight-% such as 2 to 10 weight-%component (iv) based on the mass of components (i) and (iii) and whereby component (ii) is preferably present in the amount of 0.1 to 10.0 molar equivalents of component (ii) relative to the combined molar equivalents of component (i) and (iv).

Component (v) of the Binder

In a preferred embodiment, the binder composition according to the present invention further comprises a component (v) in the form of one or more additives. These additives can also be in form of one or more catalysts.

In a particularly preferred embodiment, the additive is a mineral acid or salts thereof, and is preferably present in an amount of 0.05 to 10 weight-%, such as 1 to 7 weight-%, based on the mass of components (i) and (iii), whereby component (ii) is preferably present in the amount of 0.1 to 10 molar equivalents of component (ii) relative to the combined molar equivalents of component (i), (iv) and component (v).

In a particularly preferred embodiment, the additive is selected from the list consisting of ammonium sulfate salts, ammonium phosphate salts, ammonium nitrate salts, sodium hypophosphite and ammonium carbonate salts.

Ammonium sulfate salts may include $(NH_4)_2SO_4$, $(NH_4)HSO_4$ and $(NH_4)_2Fe(SO_4)_2 \cdot 6H_2O$.
Ammonium carbonate salts may include $(NH_4)_2CO_3$ and $NH_4HCO_3$.
Ammonium phosphate salts may include $H(NH_4)_2PO_4$, $NH_4H_2PO_4$ and ammonium polyphosphate.

In a particularly preferred embodiment, the additive is selected from the group consisting of sulfuric acid, nitric acid, boric acid, hypophosphorous acid and phosphoric acid, and salts thereof, preferably the sodium salt of hypophosphorous acid.

It has surprisingly been found that by adding a mineral acid such as hypophosphorous acid to the aqueous binder composition, the properties of the aqueous binder composition according to the present invention can be strongly improved.

In particular, the present inventors have found that by including a mineral acid such as hypophosphorous acid in the binder composition according to the present invention, the temperature of curing onset and curing endset can be strongly reduced. Further, the reaction loss can be held at a satisfactory level while at the same time the mechanical properties of the mineral fibre product comprising mineral fibres in contact with the cured binder compositions are retained.

As can be seen from the experimental result documented in the examples below, the aqueous binder composition according to the present invention, even when not containing the component (v) in form of one or more additives, have a reaction loss on the same level or lower than the reference binders A, B, C, D, E, and F. Inclusion of an additive e.g. in form of hypophosphorous acid will allow to hold the reaction loss at an advantageous level while at the same time further reducing the curing onset and curing endset temperatures.

When compared to the reference binders B, C and D, the binders according to the present invention have the additional advantage that unlike the binders of the present invention, these reference binders B, C and D need a pre-reaction for the preparation of the binders.

Accordingly, the binders according to the present invention are clearly advantageous over the binders known from the prior art. The reaction loss of the binders according to the present invention is much lower than the reaction loss of reference binder A (see examples below). When compared to the reference binders B, C, and D, the reaction loss of the binders according to the present invention can be hold at the same low level, while at the same time, the curing onset and curing endset temperatures are on the same level. Compared to the reference binders E, F, and G, the binders according to the present invention have a lower reaction loss and at the same time curing onset and curing endset temperature at the same level.

Accordingly, the binders according to the present invention have a unique combination of properties that make them advantageous over any of the reference binders.

Component (vi) of the binder

Optionally, the aqueous binder composition according to the present invention comprises a further component (vi), which is in form of one or more reactive or non-reactive silicones.

In a preferred embodiment, the component (vi) is selected from the group consisting of silicone constituted of a main chain composed of organosiloxane residues, especially diphenylsiloxane residues, alkylsiloxane residues, preferably dimethylsiloxane residues, bearing at least one hydroxyl, carboxyl or anhydride, amine, epoxy or vinyl functional group capable of reacting with at least one of the constituents of the binder composition and is preferably present in an amount of 0.1 to 15 weight-%, preferably 0.1 to 10 weight-%, more preferably 0.3 to 8 weight-%, based on the binder solids.

Component (vii) of the binder

Optionally, the aqueous binder composition according to the present invention further comprises a component (vi) in form of urea, preferably in an amount of 0 to 40 weight-% urea, preferably 0 to 20 weight-% urea, based on the mass of components (i), and (iii).

Further components of the binder composition

Optionally, the aqueous binder composition according to the present invention can contain further components besides the components (i), (ii), (iii), (iv), (v), (vi), and (vii) mentioned above. However, in a preferred embodiment >95 weight-% of the total solids content of the composition is formed by component (i), component (ii), component (iii), component (iv), component (v), component (vi), and component (vii), based on the binder component solids content.

In other words, any further components, if present, are present preferably in an amount of <5 weight-% of the total binder component solids content of the binder composition.

The present invention is also directed to a method of producing a bonded mineral fibre product which comprises the steps of contacting the mineral fibres with the binder composition according to the present invention, and curing the binder composition.

The present invention is also directed to a mineral fibre product, comprising mineral fibres in contact with the cured binder composition described above.

Mineral fibre product

The mineral fibres employed may be any of man-made vitreous fibres (MMVF), glass fibres, ceramic fibres,

basalt fibres, slag fibres, rock fibres, stone fibres and others. These fibres may be present as a wool product, e.g. like a rock wool product.

Suitable fibre formation methods and subsequent production steps for manufacturing the mineral fibre product are those conventional in the art. Generally, the binder is sprayed immediately after fibrillation of the mineral melt on to the air-borne mineral fibres.

The spray-coated mineral fibre web is generally cured in a curing oven by means of a hot air stream. The hot air stream may be introduced into the mineral fibre web from below, or above or from alternating directions in distinctive zones in the length direction of the curing oven.

Typically, the curing oven is operated at a temperature of from about 150°C to about 350°C. Preferably, the curing temperature ranges from about 200 to about 300°C. Generally, the curing oven residence time is from 30 seconds to 20 minutes, depending on, for instance, the product density.

If desired, the mineral wool web may be subjected to a shaping process before curing. The bonded mineral fibre product emerging from the curing oven may be cut to a desired format e.g., in the form of a batt. Thus, the mineral fibre products produced, for instance, have the form of woven and nonwoven fabrics, mats, batts, slabs, sheets, plates, strips, rolls, granulates and other shaped articles which find use, for example, as thermal or acoustical insulation materials, vibration damping, construction materials, facade insulation, reinforcing materials for roofing or flooring applications, as filter stock, as horticultural growing media and in other applications.

In accordance with the present invention, it is also possible to produce composite materials by combining the bonded mineral fibre product with suitable composite layers or laminate layers such as, e.g., metal, glass surfacing mats and other woven or non-woven materials.

The mineral fibre products according to the present invention generally have a density within the range of from 6 to 250 $kg/m^3$, preferably 20 to 200 $kg/m^3$. The mineral fibre products generally have a loss on ignition (LOI) within the range of 0.1 to 18.0 %, preferably 0.2 to 8.0 % by weight.

Although the aqueous binder composition according to the present invention is particularly useful for bonding mineral fibres, it may equally be employed in other applications typical for binders and sizing agents, e.g. as a binder for foundry sand, chipboard, glass fibre tissue, cellulosic fibres, non-woven paper products, composites, moulded articles, coatings etc.

The following examples are intended to further illustrate the invention without limiting its scope.

## Examples

In the following examples, several binders which fall under the definition of the present invention were prepared and compared to binders according to the prior art.

The following properties were determined for the binders according to the present invention and the binders according to the prior art, respectively:

*Binder component solids content*

The content of each of the components in a given binder solution before curing is based on the anhydrous mass of the components.

Except for 28% aq. ammonia (Sigma Aldrich), 75 % aq. glucose syrup with a DEvalue of 95 to less than 100 (C*sweet D 02767 ex Cargill), and 50% aq. hypophosporous acid (Sigma Aldrich), all other components were supplied in high purity by Sigma-Aldrich and were assumed anhydrous for simplicity.

*Binder solids*

The content of binder after curing is termed "binder solids".

Disc-shaped stone wool samples (diameter: 5 cm; height 1 cm) were cut out of stone wool and heat-treated at 580 °C for at least 30 minutes to remove all organics. The binder solids of a given binder solution was measured by distributing two samples of the binder solution (each approx. 2 g) onto two of the heat treated stone wool discs which were weighed directly before and after application of the binder solution. The binder loaded stone wool discs were then heated at 200 °C for 1 hour. After cooling and storing at room temperature for 10 minutes, the samples were weighed and the binder solids was calculated as an average of the two results. A binder with a desired binder solids could then be produced by diluting with the required amount of water or water and 10% aq. silane (Momentive VS-142).

*Reaction loss*

The reaction loss is defined as the difference between the binder component solids content and the binder solids.

*Curing characteristics - DMA (dynamic mechanical analysis) measurements*

A 15% binder solids binder solution was obtained as described above. Cut and weighed glass Whatman™ glass microfibre filters (GF/B, 150 mm Ø, cat. no. 1821 150) (2.5x1 cm) were submerged into the binder solution for 10 seconds. The resulting binder-soaked filter was then dried in a "sandwich" consisting of (1) a 0.60 kg 8×8×1 cm metal plate, (2) four layers of standard filter papers, (3) the binder soaked glass microfibre filter, (4) four layers of standard filter papers, and (5) a 0.60 kg 8×8×1 cm metal plate for approximately 2x2 minutes by applying a weight of 3.21 kg on top of the "sandwich". In a typical experiment, the cut Whatman™ glass microfibre filter would weigh 0.035 g before application of the binder and 0.125 g after application and drying which corresponds to a binder solution loading of 72%. All DMA measurements were performed with 72±1% binder solution loadings.

The DMA measurements were acquired on a Mettler Toledo DMA 1 calibrated against a certified thermometer at ambient temperature and the melting points of certified indium and tin. The apparatus was operated in single cantilever bending mode; titanium clamps; clamp distance 1.0 cm; temperature segment type; temperature range 40-280 °C; heating rate 3 °C / min; displacement 20 μm; frequency 1 Hz; single frequency oscillation mode. Curing onset and endset were evaluated using STARe software Version 12.00.

*Mechanical strength studies*

The mechanical strength of the binders was tested in a tablet test. For each binder, four tablets were manufactured from a mixture of the binder and stone wool shots from the stone wool spinning production. The shots are particles which have the same melt composition as the stone wool fibres, and the shots are normally considered a waste product from the spinning process. The shots used for the tablet composition have a size of 0.25-0.50 mm.

A 15% binder solids binder solution containing 0.5% silane (Momentive VS-142) of binder solids was obtained as described above. Four samples of the binder solution (each 4.0 g) were then mixed well with four samples of shots (each 20.0 g). The resulting four mixtures were then transferred into four round aluminum foil containers (bottom Ø = 4.5 cm, top Ø = 7.5 cm, height = 1.5 cm). One by one, the mixtures were then pressed hard with a suitably sized flat bottom glass beaker to generate an even tablet surface. The resulting tablets were then cured at 250 °C for 1 h. After cooling to room temperature, the tablets were carefully taken out of the containers. Two of the four tablets were then submerged into a water bath at 80 °C for 3 h to simulate aging. After drying for 1-2 days, the tablets were manually broken in two halves whereby the capacity of the given binder to bind shots together could be evaluated. The binders were given the notes strong (***), medium (**) or weak (*).

<u>Reference binders from the prior art prepared as comparative examples</u>

**Binder example, reference binder A**

A mixture of anhydrous citric acid (1.7 g, 8.84 mmol) and dextrose monohydrate (9.55 g; thus efficiently 8.68 g, 48.2 mmol dextrose) in water (26.3 g) was stirred at room temperature until a clear solution was obtained. 28% aq. ammonia (1.30 g; thus efficiently 0.36 g, 21.4 mmol ammonia) was then added dropwise (pH = 5.18. The binder solids was then measured (16.8%).

For DMA studies (15% binder solids solution), the binder mixture was diluted with water (0.121 g / g binder mixture). For mechanical strength studies (15% binder solids solution, 0.5% silane of binder solids, Momentive VS-142), the binder mixture was diluted with water (0.113 g / g binder mixture) and 10% aq. silane (0.008 g / g binder mixture). The final binder mixture for mechanical strength studies had pH = 5.0.

**Binder example, reference binder B**

This binder is a phenol-formaldehyde resin modified with urea, a PUF-resol.

A phenol-formaldehyde resin is prepared by reacting 37% aq. formaldehyde (606 g) and phenol (189 g) in the presence of 46% aq. potassium hydroxide (25.5 g) at a reaction temperature of 84°C preceded by a heating rate of approximately 1°C per minute. The reaction is continued at 84 °C until the acid tolerance of the resin is 4 and most of the phenol is converted. Urea (241 g) is then added and the mixture is cooled.

The acid tolerance (AT) expresses the number of times a given volume of a binder can be diluted with acid without the mixture becoming cloudy (the binder precipitates). Sulfuric acid is used to determine the stop criterion in a binder production and an acid tolerance lower than 4 indicates the end of the binder reaction.

To measure the AT, a titrant is produced from diluting 2.5 ml conc. sulfuric acid (>99 %) with 1 L ion exchanged water. 5 mL of the binder to be investigated is then titrated at room temperature with this titrant while keeping the binder in motion by manually shaking it; if preferred, use a magnetic stirrer and a magnetic stick. Titration is continued until a

slight cloud appears in the binder, which does not disappear when the binder is shaken.

The acid tolerance (AT) is calculated by dividing the amount of acid used for the titration (mL) with the amount of sample (mL):

$$AT = (\text{Used titration volume (mL)}) / (\text{Sample volume (mL)})$$

Using the urea-modified phenol-formaldehyde resin obtained, a binder is made by addition of 25% aq. ammonia (90 mL) and ammonium sulfate (13.2 g) followed by water (1.30 kg).

The binder solids was then measured as described above and the mixture was diluted with the required amount of water for DMA measurements (15% binder solids solution) or water and silane (15% binder solids solution, 0.5% silane of binder solids, Momentive VS-142) for mechanical strength measurements.

**Binder example, reference binder C**

This binder is based on alkanolamine-polycarboxylic acid anhydride reaction products.

Diethanolamine (DEA, 231.4 g) is placed in a 5-litre glass reactor provided with a stirrer and a heating/cooling jacket. The temperature of the diethanolamine is raised to 60 °C where after tetrahydrophthalic anhydride (THPA, 128.9 g) is added. After raising the temperature and keeping it at 130 °C, a second portion of tetrahydrophthalic anhydride (64.5 g) is added followed by trimellitic anhydride (TMA, 128.9 g). After reacting at 130 °C for 1 hour, the mixture is cooled to 95 °C. Water (190.8 g) is added and stirring is continued for 1 hour. After cooling to ambient temperature, the mixture is poured into water (3.40 kg) and 50% aq. hypophosphorous acid (9.6 g) and 25% aq. ammonia (107.9 g) are added under stirring. Glucose syrup (1.11 kg) is heated to 60 °C and then added under stirring followed by 50% aq. silane (Momentive VS-142) (5.0 g).

The binder solids was then measured as described above and the mixture was diluted with the required amount of water for DMA and mechanical strength measurements (15% binder solids solutions).

**Binder example, reference binder D**

This binder is based on alkanolamine-polycarboxylic acid anhydride reaction products.

Diethanolamine (DEA, 120.5 g) is placed in a 5-litre glass reactor provided with a stirrer and a heating/cooling jacket. The temperature of the diethanolamine is raised to 60 °C where after tetrahydrophthalic anhydride (THPA, 67.1 g) is added. After raising the temperature and keeping it at 130 °C, a second portion of tetrahydrophthalic anhydride (33.6 g) is added followed by trimellitic anhydride (TMA, 67.1 g). After reacting at 130 °C for 1 hour, the mixture is cooled to 95 °C. Water (241.7 g) is added and stirring is continued for 1 hour. Urea (216.1 g) is then added and stirring is continued until all solids are dissolved. After cooling to ambient temperature, the mixture is poured into water (3.32 kg) and 50% aq. hypophosphorous acid (5.0 g) and 25% aq. ammonia (56.3 g) are added under stirring.

Glucose syrup (1.24 kg) is heated to 60 °C and then added under stirring followed by 50% aq. silane (Momentive VS-142) (5.0 g).

The binder solids was then measured as described above and the mixture was diluted with the required amount of water for DMA and mechanical strength measurements (15% binder solids solutions).

**Binder example, reference binder E**

A mixture of L-ascorbic acid (1.50 g, 8.52 mmol) and 75.1% aq. glucose syrup (18.0 g; thus efficiently 13.5 g glucose syrup) in water (30.5 g) was stirred at room temperature until a clear solution was obtained. 50% aq. hypophosphorous acid (1.50 g; thus efficiently 0.75 g, 11.4 mmol hypophosphorous acid) was then added (pH 1.2). 28% aq. ammonia (1.51 g; thus efficiently 0.42 g, 24.8 mmol ammonia) was then added dropwise until pH = 6.3. The binder solids was then measured (20.2%).

For DMA studies (15% binder solids solution), the binder mixture was diluted with water (0.347 g / g binder mixture). For mechanical strength studies (15% binder solids solution, 0.5% silane of binder solids, Momentive VS-142), the binder mixture was diluted with water (0.337 g / g binder mixture) and 10% aq. silane (0.010 g / g binder mixture). The final binder mixture for mechanical strength studies had pH = 6.4.

**Binder example, reference binder F**

A mixture of L-ascorbic acid (1.50 g, 8.52 mmol) and 75.1% aq. glucose syrup (18.0 g; thus efficiently 13.5 g

glucose syrup) in water (30.5 g) was stirred at room temperature until a clear solution was obtained. 50% aq. hypophosphorous acid (0.60 g; thus efficiently 0.30 g, 4.55 mmol hypophosphorous acid) was then added (pH 1.3). 28% aq. ammonia (0.99 g; thus efficiently 0.28 g, 16.3 mmol ammonia) was then added dropwise until pH = 6.7. The binder solids was then measured (20.1%).

For DMA studies (15% binder solids solution), the binder mixture was diluted with water (0.341 g / g binder mixture). For mechanical strength studies (15% binder solids solution, 0.5% silane of binder solids), the binder mixture was diluted with water (0.331 g / g binder mixture) and 10% aq. silane (0.010 g / g binder mixture, Momentive VS-142). The final binder mixture for mechanical strength studies had pH = 6.4.

**Binder example, reference binder G**

A mixture of L-ascorbic acid (3.00 g, 17.0 mmol) and 75.1% aq. glucose syrup (16.0 g; thus efficiently 12.0 g glucose syrup) in water (31.0 g) was stirred at room temperature until a clear solution was obtained. 50% aq. hypophosphorous acid (0.60 g; thus efficiently 0.30 g, 4.55 mmol hypophosphorous acid) was then added (pH 1.2). 28% aq. ammonia (1.94 g; thus efficiently 0.54 g, 31.9 mmol ammonia) was then added dropwise until pH = 6.5. The binder solids was then measured (19.6%).

For DMA studies (15% binder solids solution), the binder mixture was diluted with water (0.306 g / g binder mixture). For mechanical strength studies (15% binder solids solution, 0.5% silane of binder solids), the binder mixture was diluted with water (0.296 g / g binder mixture) and 10% aq. silane (0.010 g / g binder mixture, Momentive VS-142). The final binder mixture for mechanical strength studies had pH = 6.6.

<u>Binder compositions according to the present invention</u>

In the following, the entry numbers of the binder example correspond to the entry numbers used in Table 1.

*Binder example, entry 1*

A mixture of 75.1% aq. glucose syrup (18.0 g; thus efficiently 13.5 g glucose syrup), ascorbic acid (1.50 g, 8.52 mmol), ammonium sulfamate (0.75 g, 6.57 mmol) and 50% hypophosphorous acid (0.60 g; thus efficiently 0.30 g, 4.55 mmol hypophosphorous acid) in water (30.5 g) was stirred at room temperature until a clear solution was obtained (pH 1.3). 28% aq. ammonia (1.17 g; thus efficiently 0.33 g, 19.2 mmol ammonia) was then added dropwise until pH = 6.4. The binder solids was then measured (21.0%).

For DMA and mechanical strength studies (15% binder solids solution, 0.5% silane of binder solids), the binder mixture was diluted with water (0.389 g / g binder mixture) and 10% aq. silane (0.011 g / g binder mixture). The final binder mixture had pH = 7.0.

*Binder example, entry 2*

A mixture of 75.1% aq. glucose syrup (18.0 g; thus efficiently 13.5 g glucose syrup), ascorbic acid (1.50 g, 8.52 mmol) and ammonium sulfamate (0.90 g, 7.89 mmol) in water (30.5 g) was stirred at room temperature until a clear solution was obtained (pH 2.4). 28% aq. ammonia (0.64 g; thus efficiently 0.18 g, 10.5 mmol ammonia) was then added dropwise until pH = 6.5. The binder solids was then measured (22.6%).

For DMA and mechanical strength studies (15% binder solids solution, 0.5% silane of binder solids), the binder mixture was diluted with water (0.496 g / g binder mixture) and 10% aq. silane (0.011 g / g binder mixture). The final binder mixture had pH = 6.7.

*Binder example, entry 3*

A mixture of 75.1% aq. glucose syrup (18.0 g; thus efficiently 13.5 g glucose syrup), ascorbic acid (1.50 g, 8.52 mmol) and N-cyclohexyl sulfamic acid (0.90 g, 5.02 mmol) in water (30.5 g) was stirred at room temperature until a clear solution was obtained (pH 0.9). 28% aq. ammonia (1.40 g; thus efficiently 0.39 g, 23.0 mmol ammonia) was then added dropwise until pH = 7.5. The binder solids was then measured (21.5%).

For DMA and mechanical strength studies (15% binder solids solution, 0.5% silane of binder solids), the binder mixture was diluted with water (0.419 g / g binder mixture) and 10% aq. silane (0.011 g / g binder mixture). The final binder mixture had pH = 7.2.

The other binders mentioned in Table 1 were prepared in a manner analogous to the preparation described above.

TABLE 1-1

| | Reference binders | | | | | | |
|---|---|---|---|---|---|---|---|
| **Example** | A | B | C | D | E | F | G |
| **Binder composition** | | | | | | | |
| | | | | | | | |
| Ascorb. acid or deriv. (%-wt.) | | | | | | | |
| L-Ascorbic acid | - | - | - | - | 10 | 10 | 20 |
| | | | | | | | |
| Carbohydrate (%-wt.) | | | | | | | |
| Glucose syrup | - | - | - | - | 90 | 90 | 80 |
| Xylose | - | - | - | - | - | - | - |
| Pan | - | - | - | - | - | - | - |
| Starch | - | - | - | - | - | - | - |
| | | | | | | | |
| Additive (%-wt.)[a] | | | | | | | |
| Urea | - | - | - | - | - | - | - |
| Hypophosphorous acid | - | - | - | - | 5 | 2 | 2 |
| Ammonium sulfate | - | - | - | - | - | - | - |
| Ammonium sulfamate | - | - | - | - | - | - | - |
| N-Cyclohexyl sulfamic acid | - | - | - | - | - | - | - |
| Sodium N-cyclohexyl sulfamate | - | - | - | - | - | - | - |
| | | | | | | | |
| Amine (equiv.) [b] | | | | | | | |
| Ammonia (added) | - | - | - | - | 1.2 | 1.2 | 1.5 |
| | | | | | | | |
| Silane (% of binder solids) | - | - | - | - | 0.5 | 0.5 | 0.5 |
| | | | | | | | |
| **Binder properties** | | | | | | | |
| Curing onset (°C) | 144 | 159 | 178 | 196 | 148 | 172 | 158 |
| Curing endset (°C) | 165 | 172 | 210 | 220 | 169 | 193 | 182 |
| Reaction loss (%) | 39.3 | 28.5 | 28.9 | 30.6 | 33.8 | 33.4 | 35.0 |
| pH of 15% soln. | 5.0 | 10.0 | 6.1 | 6.2 | 6.4 | 6.4 | 6.6 |
| Mechanical strength, unaged | *** | *** | *** | *** | *** | *** | *** |
| Mechanical strength, aged | ** | ** | *** | ** | ** | *** | ** |
| [a] Of ascorbic acid (or derivative) + carbohydrate. [b] Molar equivalents relative to ascorbic acid + additives. | | | | | | | |

TABLE 1-2

| | Glucose syrup, ascorbic acid, sulfamic acid and/or derivatives | | | | | | | | |
|---|---|---|---|---|---|---|---|---|---|
| **Example** | 1 | E | 2 | F | 3 | 4 | 5 | G | 6 |
| **Binder composition** | | | | | | | | | |
| | | | | | | | | | |
| Ascorb. acid or deriv. (%-wt.) | | | | | | | | | |
| L-Ascorbic acid | 10 | 10 | 10 | 10 | 10 | 10 | 10 | 20 | 20 |
| | | | | | | | | | |
| Carbohydrate (%-wt.) | | | | | | | | | |
| Glucose syrup | 90 | 90 | 90 | 90 | 90 | 90 | 90 | 80 | 80 |
| Xylose | - | - | - | - | - | - | - | - | - |
| Pan | - | - | - | - | - | - | - | - | - |
| Starch | - | - | - | - | - | - | - | - | - |
| | | | | | | | | | |
| Additive (%-wt.)[a] | | | | | | | | | |
| Urea | - | - | - | - | - | - | - | - | - |
| Hypophosphorous acid | 2 | 5 | - | 2 | - | - | - | 2 | - |
| Ammonium sulfate | - | - | - | - | - | - | - | - | - |
| Ammonium sulfamate | 5 | - | 6 | - | - | 2 | - | - | 2 |
| N-Cyclohexyl sulfamic acid | - | - | - | - | 6 | - | - | - | - |
| Sodium N-cyclohexyl sulfamate | - | - | - | - | - | - | 6 | - | - |
| | | | | | | | | | |
| Amine (equiv.) [b] | | | | | | | | | |
| Ammonia (added) | 1.0 | 1.2 | 0.6 | 1.2 | 1.7 | 1.0 | 1.1 | 1.5 | 1.2 |
| | | | | | | | | | |
| Silane (% of binder solids) | 0.5 | 0.5 | 0.5 | 0.5 | 0.5 | 0.5 | 0.5 | 0.5 | 0.5 |
| | | | | | | | | | |
| **Binder properties** | | | | | | | | | |
| Curing onset (°C) | 148 | 148 | 162 | 172 | 179 | 189 | 197 | 158 | 168 |
| Curing endset (°C) | 163 | 169 | 180 | 193 | 196 | 209 | 217 | 182 | 192 |
| Reaction loss (%) | 32.7 | 33.8 | 27.5 | 33.4 | 31.1 | 27.1 | 34.6 | 35.0 | 33.8 |
| pH of 15% soln. | 7.0 | 6.4 | 6.7 | 6.4 | 7.2 | 6.9 | 7.0 | 6.6 | 8.3 |
| Mechanical strength, unaged | ** | *** | ** | *** | *** | *** | *** | *** | *** |
| Mechanical strength, aged | ** | ** | ** | *** | ** | *** | *** | ** | ** |
| [a] Of ascorbic acid (or derivative) + carbohydrate. [b] Molar equivalents relative to ascorbic acid + additives. | | | | | | | | | |

## Claims

**1.** An aqueous binder composition for mineral fibres comprising

a component (i) in the form of one or more compounds selected from

- compounds of the formula, and any salts thereof:

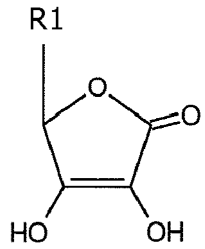

in which R1 corresponds to H, alkyl, monohydroxyalkyl, dihydroxyalkyl, polyhydroxyalkyl, alkylene, alkoxy, amine;

- compounds of the formula, and any salts thereof:

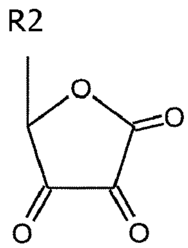

in which R2 corresponds to H, alkyl, monohydroxyalkyl, dihydroxyalkyl, polyhydroxyalkyl, alkylene, alkoxy, amine;

a component (ii) in the form of one or more compounds selected from the group of ammonia, amines or any salts thereof;
a component (iii) in the form of one or more carbohydrates;
a component (iv) in the form of one or more compounds selected from sulfamic acid, derivatives of sulfamic acid or any salt thereof.

**2.** An aqueous binder composition of claim 1, wherein the component (i) is selected from the group of L-ascorbic acid, D-isoascorbic acid, 5,6-isopropylidene ascorbic acid, dehydroascorbic acid and/or any salt of the compounds, preferably calcium, sodium, potassium, magnesium or iron salts.

**3.** An aqueous binder composition of claim 1 or 2, wherein the component (ii) is selected from the group of ammonia and/or amines such as piperazine, hexamethylenediamine, m-xylylenediamine, diethylenetriamine, triethylenetetramine, tetraethylenepentamine, monoethanolamine, diethanolamine and/or triethanolamine.

**4.** An aqueous binder composition according to any one of the preceding claims, wherein the component (iii) is selected from the group of dextrose, glucose syrup, xylose, fructose or sucrose.

**5.** An aqueous binder composition according to any one of the preceding claims, wherein component (iv) is selected from the group consisting of sulfamic acid and any salt thereof, such as ammonium sulfamate, calcium sulfamate, sodium sulfamate, potassium sulfamate, magnesium sulfamate, cobalt sulfamate, nickel sulfamate, N-cyclohexyl sulfamic acid and any salt thereof, such as sodium N-cyclohexyl sulfamate.

**6.** An aqueous binder composition according to any one of the preceding claims, comprising

- component (i) in the form of ascorbic acid;
- component (ii) in the form of ammonia and/or diethanolamine and/or triethanolamine;
- component (iii) in the form of dextrose and/or a glucose syrup with a DE of 60-99;

- component (iv) in the form of sulfamic acid and/or its salts, preferably ammonium sulfamate and/or N-cyclohexyl sulfamic acid and/or its salts.

**7.** An aqueous binder according to any one of the preceding claims, wherein the proportion of components (i), (ii), (iii), and (iv) is within the range of 1 to 50 weight-% component (i) based on the mass of components (i) and (iii), 50 to 99 weight-% component (iii) based on the mass of components (i) and (iii), 0.05 to 15 weight-%, such as 1 to 12 weight-%, such as 2 to 10 weight-% component (iv) based on the mass of components (i) and (iii) and whereby component (ii) is preferably present in the amount of 0.1 to 10.0 molar equivalents of component (ii) relative to the combined molar equivalents of component (i) and (iv).

**8.** An aqueous binder composition according to any one of the preceding claims, wherein the aqueous binder composition further comprises a component (v) in the form of one or more additives, preferably of catalytic usage.

**9.** An aqueous binder composition according to claim 8, wherein the component (v) is a mineral acid or salts thereof, and is preferably present in an amount of 0.05 to 10 weight-%, such as 1 to 7 weight-%, based on the mass of components (i) and (iii), whereby component (ii) is preferably present in the amount of 0.1 to 10 molar equivalents of component (ii) relative to the combined molar equivalents of component (i), (iv) and component (v).

**10.** An aqueous binder composition according to claim 9, wherein the additive is selected from the group of ammonium sulfate salts, ammonium phosphate salts, ammonium nitrate salts, sodium hypophosphite and ammonium carbonate salts.

**11.** An aqueous binder composition according to claim 9, wherein the additive is selected from the group of sulfuric acid, nitric acid, boric acid, hypophosphorous acid and phosphoric acid.

**12.** An aqueous binder composition according to any one of the preceding claims, wherein the aqueous binder composition further comprises a component (vi) in the form of one or more reactive or non-reactive silicones.

**13.** An aqueous binder composition according to claim 12, wherein the component (vi) is selected from the group consisting of silicone constituted of a main chain composed of organosiloxane residues, especially diphenylsiloxane residues, alkylsiloxane residues, preferably dimethylsiloxane residues, bearing at least one hydroxyl, carboxyl or anhydride, amine, epoxy or vinyl functional group capable of reacting with at least one of the constituents of the binder composition and is preferably present in an amount of 0.1 to 15 weight-%, preferably from 0.1 to 10 weight-%, more preferably 0.3 to 8 weight-%, based on the binder solids.

**14.** An aqueous binder composition according to any one of the preceding claims, whereby the aqueous binder composition further comprises a component (vii) in form of urea, preferably in an amount of 0 to 40 weight-%, preferably 0 to 20 weight-% urea, based on the mass of components (i), and (iii).

**15.** An aqueous binder composition according to any one of the preceding claims, wherein >95 weight-% of the total solids content of the composition is formed by component (i), component (ii), component (iii), component (iv), component (v), component (vi), and component (vii), based on the binder component solids content.

**16.** A method of producing a bonded mineral fibre product which comprises the steps of contacting the mineral fibres with a binder composition according to any one of the claims 1 to 15, and curing the binder composition.

**17.** Mineral fibre product, comprising mineral fibres in contact with the cured binder composition according to any one of claims 1 to 15.

Europäisches Patentamt
European Patent Office
Office européen des brevets

# EUROPEAN SEARCH REPORT

Application Number
EP 14 20 0253

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2011/044490 A1 (OWENS CORNING INTELLECTUAL CAP [US]; HAWKINS CHRISTOPHER [US]; HERNAND) 14 April 2011 (2011-04-14)<br>* page 13, line 4 - line 20 *<br>----- | 1-17 | INV.<br>C03C25/24<br>C03C25/26<br>C03C25/32<br>C08J5/24<br>C09J103/02<br>D04H1/587<br>D04H1/64 |
| A | US 2011/101260 A1 (PONS Y MOLL OLIVIER [FR] ET AL) 5 May 2011 (2011-05-05)<br>* examples *<br>----- | 1-17 | |
| A | WO 2008/084173 A2 (SAINT GOBAIN ISOVER [FR]; DOUCE JEROME [FR]; DEKONINCK ALEXANDRA [FR];) 17 July 2008 (2008-07-17)<br>* claims; examples *<br>----- | 1-17 | |
| | | | TECHNICAL FIELDS SEARCHED (IPC) |
| | | | C03C<br>C08J<br>C09J<br>D04H |

The present search report has been drawn up for all claims

3

| Place of search | Date of completion of the search | Examiner |
|---|---|---|
| Munich | 12 June 2015 | Pollio, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 14 20 0253

This annex lists the patent family members relating to the patent documents cited in the above-mentioned European search report. The members are as contained in the European Patent Office EDP file on
The European Patent Office is in no way liable for these particulars which are merely given for the purpose of information.

12-06-2015

| Patent document cited in search report | Publication date | Patent family member(s) | Publication date |
|---|---|---|---|
| WO 2011044490 A1 | 14-04-2011 | AU 2010303254 A1 | 26-04-2012 |
| | | CA 2777078 A1 | 14-04-2011 |
| | | CN 102695684 A | 26-09-2012 |
| | | EP 2485989 A1 | 15-08-2012 |
| | | US 2011086567 A1 | 14-04-2011 |
| | | US 2015017858 A1 | 15-01-2015 |
| | | US 2015033981 A1 | 05-02-2015 |
| | | WO 2011044490 A1 | 14-04-2011 |
| US 2011101260 A1 | 05-05-2011 | AU 2009245532 A1 | 12-11-2009 |
| | | CA 2720924 A1 | 12-11-2009 |
| | | EP 2268590 A2 | 05-01-2011 |
| | | FR 2929953 A1 | 16-10-2009 |
| | | JP 5562937 B2 | 30-07-2014 |
| | | JP 2011516748 A | 26-05-2011 |
| | | RU 2010145927 A | 20-05-2012 |
| | | US 2011101260 A1 | 05-05-2011 |
| | | WO 2009136106 A2 | 12-11-2009 |
| WO 2008084173 A2 | 17-07-2008 | AU 2007343216 A1 | 17-07-2008 |
| | | CA 2673433 A1 | 17-07-2008 |
| | | CN 101563379 A | 21-10-2009 |
| | | EP 2091986 A2 | 26-08-2009 |
| | | FR 2910481 A1 | 27-06-2008 |
| | | JP 5384365 B2 | 08-01-2014 |
| | | JP 2010513736 A | 30-04-2010 |
| | | KR 20090091786 A | 28-08-2009 |
| | | RU 2009128187 A | 27-01-2011 |
| | | UA 95826 C2 | 12-09-2011 |
| | | US 2010075146 A1 | 25-03-2010 |
| | | WO 2008084173 A2 | 17-07-2008 |
| | | ZA 200904347 A | 28-04-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 583086 A
- EP 990727 A
- EP 1741726 A
- US 5318990 A
- US 20070173588 A
- WO 9936368 A
- WO 0105725 A
- WO 0196460 A
- WO 0206178 A
- WO 2004007615 A
- WO 2006061249 A
- WO 2008023032 A